(19) Europäisches Patentamt
European Patent Office
Office européen des brevets

(11) **EP 2 369 850 A2**

(12) **EUROPEAN PATENT APPLICATION**

(43) Date of publication:
**28.09.2011 Bulletin 2011/39**

(51) Int Cl.:
***H04N 13/00*** $^{(2006.01)}$

(21) Application number: **11156671.7**

(22) Date of filing: **02.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2010 TR 201002349**

(71) Applicant: **Vestel Elektronik Sanayi ve Ticaret A.S.
45030 Manisa (TR)**

(72) Inventors:
• **Özkalayci, Burak Oguz
45030, Manisa (TR)**
• **Tasli, Emrah
45030, Manisa (TR)**

(74) Representative: **Cayli, Hülya
Paragon Consultancy Inc.
Koza Sokak No: 63/2
GOP
06540 Ankara (TR)**

(54) **Super resolution enhancement method for n-view and n-depth multi-view video**

(57) Present invention describes a method for resolution enhancement for N-view + N-depth multi-view video. Since any multi-view data contain the image of a scene at the very same time from different viewing angles; the redundant information in the neighbouring frames (spatial dimension) should be utilized to increase the resolution in each frame by using the 3D multi-view geometry and image registration techniques which uses the depth information of the views for registering the views which means warping the image on the neighbouring views. In the method described in present invention, the real (x, y, z) coordinates of the scene point X is mapped to the camera array with projection matrix $Pc_0$ where $Pc_0$ is a 3x4 projection matrix for camera $C_0$. By using matrix operations, the three dimensional position of the object X (3D) can be obtained. By using obtained 3D position of the object X (3D) and the projection matrix of the camera $C_1$ $P_{C1}$, the position information of the object X (3D) for camera $C_1$ can be obtained. The obtained position information for camera $C_1$ with given typical 3D warping operation is the object information that falls on the camera $C_1$. By using obtained 3D position of the object X (3D) and the projection matrix of any camera, the object information that falls on processed camera can be obtained.

Figure 1

## Description

### Technical Field

Present invention relates to a method concerning resolution enhancement for N-view + N-depth multi-view video displayed in any kind of multi-view display devices.

### Prior Art

Present development of displays is directed to 3D displays because of user demands. Thus, 3D technology attracts more interest by manufacturers, and research and development departments of the display device manufacturers tend to work on 3D technology.

Multi-view video technology, which can be described as capturing the same scene from different viewpoints by more than one camera, is developed to satisfy user demand. Such technological developments require different video compression standard and application of said standard.

Rendering capabilities like Image Based Rendering (IBR) techniques, which make multiview video a promising streaming standard for 3D contents are available in the state of the art.

Furthermore, developing autostereoscopic display technology can create 3-dimensional feeling by properly displaying the multi-view stream.

A further scenario for 3D content formats is the N-view + N-depth. By this format, a limited number of views of the scene and their corresponding depth maps will be encoded for streaming and the other intermediate views will be rendered at the receiver by using the depth, intensity and camera array geometry information.

In the same context, the MPEG community has declared a standard for multi-view video compression standard named Multiview Video Coding (MVC), which is an amendment to previous H.264/AVC standard. MVC is a combination of efforts by MPEG/VCEG that enables efficient encoding of sequences captured simultaneously from more than one camera using a single video stream. Due to MVC standard background, MVC is compatible with H.264/AVC. Thus, older devices and software are ignoring additional information for second view to decode stereoscopic (two-view) video streams which are supported by MVC standard.

Combined temporal and inter-view prediction is the key for efficient MVC due to large amount of inter-view statistical dependencies contained in multi-view video. A frame from a certain camera can be predicted not only from temporally related frames of the same camera but also from the frames of neighbouring cameras. Thus, said interdependencies can be used for efficiency and improvement in video image.

In US 2008/0068329 patent document, a multi-view autostereoscopic display and improved resolution for said display is described. US 2008/0068329 patent document provides a multi-view autostereoscopic display apparatus with improved resolution which comprises a display panel, an image separating device and a directional backlight unit. Said display panel displays a plurality of images of different view points. The image separation device separates the plurality of images such that the separated images can be alternately observed in different viewing zones. The directional backlight unit is switched between a plurality of different angular distributions of illumination in order to selectively provide light to the display panel. The display panel may have high refresh rate which is about 100-120 Hz. Since the high speed display panel is used and images of different view points are displayed alternately for two frames, the multi-view autostereoscopic display apparatus can provide higher resolution than its conventional counterpart.

### Brief Description of the Invention

Present invention describes a method for resolution enhancement for N-view + N-depth multi-view video. Since any multi-view data contains the image of a scene at the very same time from different viewing angles; the redundant information in the neighbouring frames (spatial dimension) can be utilized to increase the resolution in each frame by using the 3D multi-view geometry and image registration techniques which uses the depth information of the views for registering the views. Thus, according to method, resolution enhancement is provided by warping the image on the neighbouring views.

### Objective of the Invention

The object of the present invention is to provide a resolution enhancement for N-view + N-depth multi-view video.

Another object of the present invention is to provide resolution enhancement by warping the image on the neighbouring views.

Another object of the invention is to utilize the redundant information in the neighbouring views by using the 3D multi-view geometry and image registration techniques.

Another object of the invention is to exploit the depth information of the views for registering the views in order to increase the resolution of the 3D content.

## Brief Description of the Drawings

Figure 1: shows the general approach for warping the image on the neighbouring frames.
Figure 2: shows warping process application.
Figure 3: shows another application of warping process.

The reference numbers as used in figures may possess the following meanings.

An image plane of one of the views in the multi-view content (1)
The camera center for projection (2)
A pixel/sub-pixel point on the image plane (3)
The back projection trajectory of a pixel on the image plane (4)
The back projected point in 3D space (5)
The depth value of the point X with respect to the camera (view) $C_0$ (6)
The projection trajectory of a pixel to the 3D position of the object (7)

## Detailed Description of the Invention

As described in prior art, 3D technology has been growing rapidly. The development of products should be satisfied in order to catch rapidly growing 3D technology and to meet user satisfaction. Therefore, present invention describes a method to improve resolution for N-view + N-depth multi-view video displayed in any kind of multi-view display devices to meet user satisfaction across growing 3D technology.
A particular solution for resolution enhancement given in present invention is to do the image registration by warping images on the neighbouring frames.
Any multi-view data contains the image of a scene at the very same time from different viewing angles. This means hereby that extra information about the contained scene is inherited in one single frame. More particularly, the redundant information in the neighbouring frames (spatial dimension) will be utilized to increase the resolution in each frame by using the 3D multi-view geometry and image registration techniques which use the depth information of the views for registering the views. Thus, doing image registration by warping the image on the neighbouring frames is very advantageous compared to prior art applications.

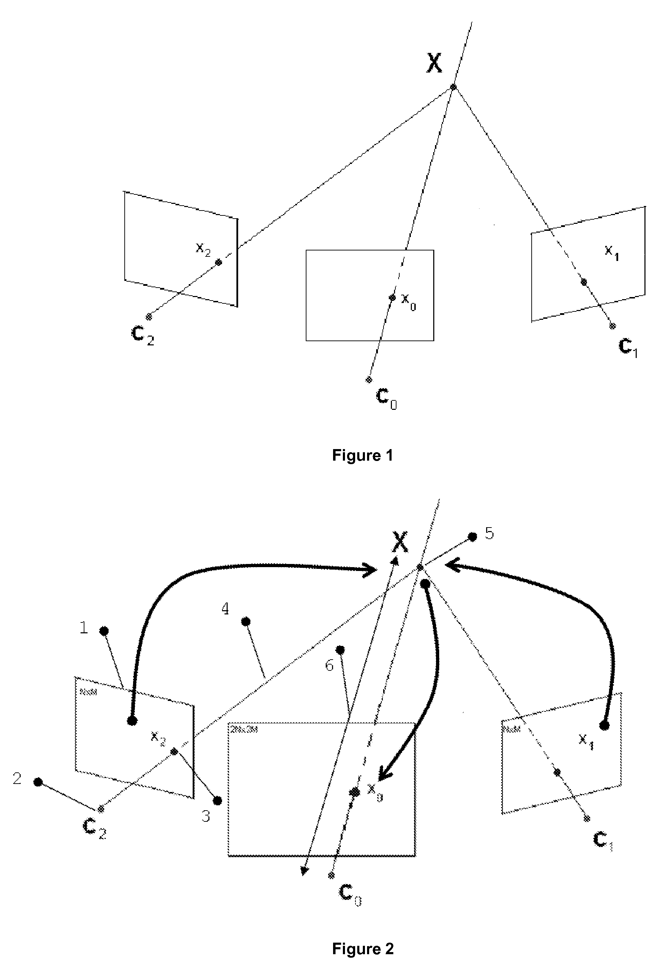

Figure 1 shows the general approach for warping the image on the neighbouring frames. In figure 1, the multi-view camera set up for three cameras case is given. The real (x, y, z) coordinates of the scene point X are mapped to the camera array with projection matrix $Pc_0$ by using given following equation (A),

$$X_0 (2D) = Pc_0 * X (3D) \qquad (A)$$

where $Pc_0$ is a 3x4 projection matrix for camera $C_0$. Assuming that two dimensional image information $X_0$ (2D) which comprises pixel information containing intensity and/or color information and $Pc_0$ are known, the three dimensional object information X (3D) which contains intensity and/or color information can be obtained using matrix operations. By using obtained 3D object information X (3D) and the projection matrix of the camera $C_1$ $Pc_1$, $X_1$ which is the image information X (3D) of the object for camera $C_1$, can be obtained by following equation (B).

$$X_1 (2D) = Pc_1 * X (3D) \qquad (B)$$

The obtained image information for camera $C_1$ with given typical 3D warping operation is the object information that falls on the camera $C_1$. By using obtained 3D position of the object X (3D) and the projection matrix of any camera, the object information that falls on processed camera can be obtained. For instance according to Figure 1, there exists a third camera $C_2$ to obtain another object information that falls on that camera $C_2$.

As explained above, image registration is done by warping the image on the neighbouring views. For warping process, application is given in Figure 2 in detail. The image to be super resolved which is caught by camera $C_0$ is shown in the middle of two neighbouring views. The pixel information (3) in the neighbouring views are back projected (4) to their corresponding 3D positions (5) by using equation (B) and then carried to the image positions in 2D captured by camera $C_0$ by using equation (A). Thus, the depth information (6) of the views for registering the views is used. Therefore, pixel information (3) are taken from source, which is 3D object information, and sent to target, which is the image captured by camera $C_0$. Repeating process for all cameras in the system supplies extra information for the camera of interest which is camera $C_0$ given in the figure 2. That extra information can be used to enhance the resolution of target ($C_0$) by finding unknown pixels.

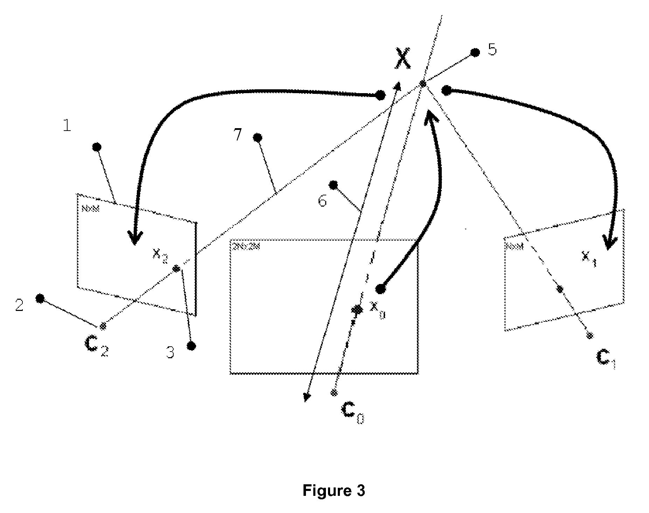

Moreover, another application for warping process is also given in Figure 3. The image information of the camera $C_0$ to be super resolved is back projected (4) to 3D object information of the object, by using equation (A) and then carried (7) to the images captured by neighbouring cameras ($C_1$, $C_2$) by using equation (B). Therefore, camera $C_0$ sends the unknown pixel information and the source obtains the unknown pixel information from other views. Thus, the pixel information of the images captured from projected camera ($C_1$, $C_2$) is carried to the center camera $C_0$ and unknown pixel information in the high resolved image is thereby obtained.

The core aspect of the invention is to exploit the depth information of the views for registering the views in order to increase the resolution of the 3D content. However, after projection processes, the projected points in both methods may correspond to non integer locations of the pixel values. In this case, interpolation methods can be used to obtain non integer valued pixel intensity.

## Claims

1.  A resolution enhancement method for N-view and N-depth multi-view video which is obtained from a camera system comprising more than one camera by warping the image on the neighbouring views **characterized in that** comprises the steps of;

    - obtaining the three dimensional object information by using two dimensional image information taken from a camera of interest ($C_0$) and a projection matrix of said camera of interest
    - obtaining another two dimensional image information of said object from another camera ($C_1$, $C_2$) by using the obtained three dimensional object information and a projection matrix of said another camera ($C_1$, $C_2$),
    - gathering unknown pixel information for said camera of interest ($C_0$) from said another camera ($C_1$, $C_2$)
    - repeating above mentioned steps for all cameras of said camera system.

2.  A method according to Claim 1 wherein; said unknown pixel information for an. image captured by said camera of interest ($C_0$) is obtained by back projecting the pixel information of captured images in the neighbouring views to said three dimensional object information and then carrying said pixel information to an image captured by said camera of interest.

3.  A method according to Claim 1 wherein; said unknown pixel information for an image captured by said camera of interest ($C_0$) is obtained by back projecting the pixel information of the image captured by said camera of interest ($C_0$) to said three dimensional object information and carrying said pixel information to the image captured by said another camera ($C_1$, $C_2$) and then carrying another pixel information to the image captured by said camera of interest ($C_0$).

4.  A method according to Claim 1 wherein; an interpolation method can be used to obtain non integer valued pixel intensity after projection.

Figure 1

Figure 2

**Figure 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080068329 A